# EUROPEAN PATENT SPECIFICATION

(11) **EP 3 308 319 B1**
(45) Date of publication and mention of the grant of the patent: **10.03.2021**
(21) Application number: 16722180.3
(22) Date of filing: 10.05.2016
(51) Int. Cl.: H04W 12/06, H04W 12/02, H04L 29/06, G06F 21/62

(54) **METHOD AND SYSTEM FOR ANONYMIZING A USER IDENTITY AND/OR USER DATA OF A SUBSCRIBER OF A DATA PROTECTION SERVICE, PROGRAM AND COMPUTER PROGRAM PRODUCT**
VERFAHREN UND SYSTEM ZUR ANONYMISIERUNG EINER BENUTZERIDENTITÄT UND/ODER VON BENUTZERDATEN EINES TEILNEHMERS EINES DATENSCHUTZDIENSTES, PROGRAMM UND COMPUTERPROGRAMMPRODUKT
PROCÉDÉ ET SYSTÈME PERMETTANT D'ANONYMISER L'IDENTITÉ D'UN UTILISATEUR ET/OU DES DONNÉES D'UTILISATEUR D'UN ABONNÉ D'UN SERVICE DE PROTECTION DE DONNÉES, PROGRAMME ET PRODUIT DE PROGRAMME INFORMATIQUE

(30) Priority: 10.06.2015 EP 15171512
(43) Date of publication of application: 18.04.2018
(73) Proprietor: Deutsche Telekom AG, 53113 Bonn (DE)
(72) Inventor: THOMAS, Graham, Camberley Surrey GU15 1PN (GB)
(74) Representative: Schwöbel, Thilo K.
(86) International application number: PCT/EP2016/060471
(87) International publication number: WO 2016/198229

(56) References cited:
- EP-A1- 2 587 397
- US-A1- 2011 238 482
- US-B1- 7 853 786
- ADOBE: "Flash Player Help: Website Privacy Settings panel / Privacy pop-up question", INTERNET CITATION, 17 July 2011 (2011-07-17), pages 1-5, XP002671725, Retrieved from the Internet: URL:http://web.archive.org/web/20110717205 939/http://www.macromedia.com/support/docu mentation/en/flashplayer/help/settings_man ager06.html [retrieved on 2012-03-19]
- Anonymous: "fake-factory . PyPI", , 24 May 2015 (2015-05-24), pages 1-12, XP055741646, Retrieved from the Internet: URL:https://pypi.org/project/fake-factory/ 0.5.1/ [retrieved on 2020-10-20]

## Description

### BACKGROUND

The present invention relates to a method for anonymizing a user identity and/or user data.

Furthermore, the present invention relates to a system for anonymizing a user identity and/or user data.

Generally, there is a growing concern by users of telecommunications networks, e.g. the internet, of the privacy of their personal data. Personal data in the form of a user identity and/or user data is typically used by providers of third-party services that are accessed by the user via the telecommunications network. For example, such a third-party service may monitor the purchase behaviour of the user in order to provide advice to the user targeted to his needs. Currently, user identity and/or user data is either stored at a location in the sphere of influence of the third-party service or on computing device of the user, wherein the data is accessible by the third-party service. Thus, the protection of the user's privacy is relatively low. Personal data may be misused or sold to other organizations by the providers of the third party services

US 2011/0238482 A1 discloses a method where user data is anonymised by abstracting the user data to a more general information, i.e. instead of providing the street of the user merely the city is provided.

### SUMMARY

An object of the present invention is to provide a method and a system for protecting and/or anonymizing a user identity and/or user data such that the protection of the user's privacy is improved.

The object of the present invention is achieved by a method according to claim 1.

According to the present invention a data protection service is provided that is able to serve requests of third party services for the transmission of user related data. Upon request by either the first third party service or the second third party service, the data protection service transmits user related data, wherein the user identity and/or the user data are at least partially protected and/or anonymized with respect to the requesting third party service according to a set of access rules assigned to the requesting third party service. Thereby, it is advantageously possible to store the user identity and/or the user data in a secured place and control access to the user identity and/or the user data by third party services. Preferably, the data protection service is therefore also referred to as a personal data vault. For example, the first third party service and/or the second third party service is a payment service, an application service, a electronic commerce service or an application provided to the computing device, wherein the application is executed on the computing device or on a network node of the telecommunications network.

Further, the set of access rules assigned to either the first third party service or the second third party service may be changed by means of the computing device of the subscriber of the data protection service. Alternatively or additionally, the assignment of the first third party service and/or the second third party service to the first set of access rules and/or the second set of access rules may be changed by means of the computing device of the subscriber of the data protection service. Thereby, control by the subscriber of the data protection service of the usage of his user identity and/or user data is enhanced. In summary, the measures provided by the method according to the invention improve the protection of the user's privacy when using third party services via a telecommunications network.

Within the context of the presented invention, preferably a blocking information and/or access information is sent from the computing device of the subscriber to the data protection service in order to change the first set of access rules and/or to change the second set of access rules and/or to change the assignment of the first third party service and/or the second third party service to the first set of access rules and/or the second set of access rules.

According to a preferred embodiment of the present invention, the telecommunications network is an IP-based telecommunications network and/or the communication device is a mobile communication device. In a particular preferred embodiment of the invention, the mobile communication device is a mobile phone, a smart phone, a tablet computer, or another portable computing device.

According to the present invention, it is thereby advantageously possible to further enhance the user convenience.

According to a preferred embodiment of the present invention, the user related data transmitted to the first third party service and/or the second third party service has a higher abstraction level compared to the user identity and/or user data of the subscriber of the data protection service. Preferably, instead of transmitting the user identity and/or user data, which can be raw data provided either by the subscriber or stored automatically, abstracted data is transmitted. Preferably, the user related data is abstracted in such a way that it does not allow for restoring of the user identity and/or the user data. The abstraction level of the user related data is preferably set by the first set of access rules and/or the second set of access rules. Advantageously, the user identity and/or user data of the subscriber is stored at the data protection service. For example, the data protection service comprises a data storage device or a data storage server.

According to the present invention, it is thereby advantageously possible to provide data at an abstraction level which is sufficient for the requesting third party service but nothing more.

According to the present invention, the first third party service is an application provided to the computing device together with the first set of access rules as a predefined set of access rules, in particular in a trusted marketplace, and the second third party service is an application provided to the computing device together with the second set of access rules as a predefined set of access rules, in particular in a trusted marketplace.

According to the present invention, it is thereby advantageously possible to enhance usability of the data protection service, in particular to enhance setting up of the data protection service for a newly installed third party service.

According to the present invention, it is possible that according to the first set of access rules a fake piece of data is transmitted as part of the user related data to the first third party service.

According to the present invention, it is thereby advantageously possible to ensure that the requesting third party service is not able to draw conclusions as to the user identity and/or user data by taking multiple pieces of information.

According to the present invention, the fake piece of data is generated randomly or pseudo-randomly.

According to the present invention, it is thereby advantageously possible to generate fake data with reduced effort.

It is preferred that, according to the first set of access rules transmission of an IP address of the communication device of the subscriber and/or an IP address of the data protection service is blocked.

According to the present invention, it is thereby advantageously possible to ensure that the requesting third party service is not able to monitor and/or obtain non-permitted user data.

It is preferred that, according to the first set of access rules the amount of data transmitted to the first third party service is limited by a first upper limit and according to the second set of access rules the amount of data transmitted to the second third party service is limited by a second upper limit, wherein the first upper limit is different from the second upper limit.

According to the present invention, it is thereby advantageously possible to limit the amount of data provided to each of the third party services individually.

It is preferred that, according to the first set of access rules a first abstraction level of data transmitted to the first third party service is set and according to the second set of access rules a second abstraction level of data transmitted to the second third party service is set, wherein the first abstraction level is different from the second abstraction level.

According to the present invention, it is thereby advantageously possible to set the abstraction level for each of the third party services individually.

The present invention also relates to a system according to claim 7.

With the system according to the invention the same advantages can be achieved as described above in relation to the method according to the invention.

Furthermore, the present invention relates to a program comprising a computer readable program code which, when executed on a computer or on a computing device or on a network component of a telecommunications network or in part on a computing device and in part on a network component of a telecommunications network, causes the computer or the computing device and/or the network component of the telecommunications network to perform a method according to the present invention.

Furthermore, the present invention relates to a computer program product for using a machine type communication device with a telecommunications network, the computer program product comprising a computer program stored on a storage medium, the computer program comprising program code which, when executed on a computer or on a computing device or on a network component of a telecommunications network or in part on a computing device and in part on a network component of a telecommunications network, causes the computer or the computing device and/or the network component of the telecommunications network to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings The invention is defined by the appended claims.

### BRIEF DESCRIPTION OF THE DRAWINGS

Figure 1 schematically illustrates a system according to the present invention.
Figure 2 schematically illustrates a first embodiment of a data protection service according to the invention.
Figure 3 schematically illustrates a second embodiment of a data protection service according to the invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

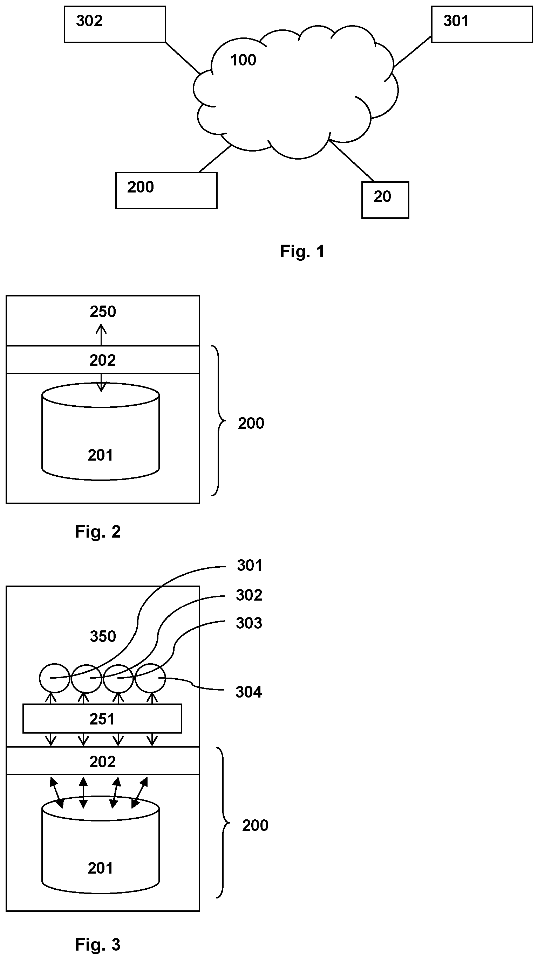

In Figure 1, a system according to the present invention is illustrated schematically. The system is configured for anonymizing a user identity and/or user data of a subscriber of a data protection service 200. The system comprises the data protection service 200 in the form a personal data vault, a telecommunications network 100, a computing device 20 as well as a first third party service 301 and a second third party service 302.

According to the present invention, the telecommunications network 100 is preferably an Internet Protocol (IP) based telecommunications network 100. The telecommunications network 100 may include any landline and/or mobile computer network, for example the Internet and/or any telephone network.

The computing device 20 is a computing device of the subscriber of the data protection service 200. The computing device 20 is connected to the telecommunications network 100. The computing device 20 is preferably a personal computer or mobile computer, for example a tablet computer or smartphone or any other computing device.

The system is configured such that the first third party service 301 and the second third party service 302 are accessed, via the telecommunications network 100, by means of the computing device 20 of the subscriber of the data protection service 200.

Additionally, the system is configured such that in case that the first third party service 301 requests the transmission of user related data from the data protection service 200, the data protection service 200 transmits user related data being data related to the user identity and/or user data, wherein the user identity and/or the user data are at least partly protected and/or anonymized with respect to the first third party service 301 according to a first set of access rules, and such that in case that the second third party service 302 requests the transmission of user related data from the data protection service 200, the data protection service 200 transmits user related data being data related to the user identity and/or user data, wherein the user identity and/or the user data are at least partly protected and/or anonymized with respect to the second third party service 302 according to a second set of access rules.

The protection service 200 is controlled, via the telecommunications network 100, by means of the computing device 20 of the subscriber of the data protection service 200. Preferably, the subscriber - which is herein also called a user of the computing device 20 - is registered with the data protection service 200, wherein a personal account is set-up for the user. Authorization information for the first third party service 301 and/or the second third party service can be set and/or modified by changing a first set of access rules and/or a second set of access rules via the telecommunications network 100 by means of the computing device 20. Alternatively, the assignment of both the third party services to both the sets of access rules is changed via the telecommunications network 100 by means of the computing device 20. Thereby, the protection of the user's privacy is improved when using third party services via a telecommunications network. The user provides the authorization information (e.g. a permission or level of access) for the first third party service 301 and/or the second third party service 302, preferably by sending a blocking information and/or an access information from the computing device of the subscriber to the data protection service 200. Upon receiving of the blocking information and/or the access information at the data protection service 200, the first set of access rules and/or the second set of access rules is changed. Alternatively, upon receiving the blocking information and/or the access information at the data protection service 200, the assignment of the first third party service and/or the second third party service to the first set of access rules and/or the second set of access rules is changed. In other words, the user controls the permissions of the first third party service 301 and the second third party service 302 via the computing device 20.

In Figure 2, a first embodiment of a data protection service 200 is schematically depicted. The data protection service 200 comprises a data storage device 201, wherein the user identity and/or user data of the subscriber is stored. The data stored on the data storage device 201 is raw data provided either by the subscriber itself or automatically stored based on everyday activities and usage. For example, the computing device 20 can automatically store usage data in the storage device 201 of the data protection service. Despite usage data, the user data may comprise information on what products the user purchased at which time in what quantity and how much the user spent. Further, the user data may comprise information location data of the computing device, e.g. on which radio cell the computing device was logged on at which time and for how long. In addition the user identity may be stored in the data storage device 201, including the IP address of the computing device 20, as well as the address, name, sex, birthdate etc. of the subscriber using the computing device 20.

The data protection service 200 further comprises a permission management system 202 which manages the permissions to access the data stored in the data storage device 201 according to the access rules defined as part of the first set of access rules and the second set of access rules.

Access to the data protection service 200 by both the third party services is provided via an application programming interface (API) 250. According to the first embodiment, the API 250 is of black-box type, wherein the API 250 is anomalizing responses from the data storage service 200 according to the set of access rules defined for the respective requesting third party service 301, 302. The user related data transmitted to the first third party service 301 and/or the second third party service 302 in response to a request has a higher abstraction level compared with the user identity and/or user data stored in the data storage device 201.The black box API 250 anomalizes the responses from the data protection service 200, thus, limits the third party service 301, 302 gaining unwanted knowledge about the subscriber of the data protection service 200.

Additionally, different abstraction level settings can be used for the first third party service 301 and the second third party service 302 to account for different privacy concerns of the subscriber about the third party services. For example, according to the first set of access rules, a first abstraction level of data transmitted to the first third party service 301 is set and, according to the second set of access rules, a second abstraction level of data transmitted to the second third party service 302 may be set, wherein the first abstraction level is different from the second abstraction level.

Further, any set of access rules may comprise at least one access rule according to which a fake piece of data is transmitted as part of the user related data to the respective third party service 301, 302. Thus, instead of transmitting user related data based on the data stored in the data storage device 201 the data protection service 200 transmits pseudo-user related data that at least comprises some fake pieces of information or is based on fake pieces of information. The fake piece of data is generated preferably generated randomly or pseudo-randomly. Alternatively, it is disclosed that the fake piece of data may be generated systematically or manually. The data storage device 201 may comprise fake data sets comprising several fake pieces of data, e.g. in the form of a virtual identity. Any set of access rules may comprise at least one rule according to such which virtual identity data is transmitted instead of real user identity and/or user data.

Alternatively or additionally, any set of access rules may comprises at least one access rule according to which transmission of an IP address of the communication device 20 of the subscriber and/or transmission of an IP address of the data protection service 200 is blocked.

In Figure 3, a second embodiment of a data protection service 200 is schematically depicted. In contrast to the first embodiment, access to the data protection service 200 is provided via an API 251 of white box type. The white box API 251 differs from the black box API 250 of the first embodiment in that via the white box API 251 controlled access to the user identity and/or user data stored in the data storage device 201 is allowed. Thus, via the white boy API 251 the third party services 301, 302, 303, 304 may access selected raw data instead of user related data on a higher abstraction level only. Access to the user identity and/or the user data is again controlled by sets of access rules assigned to the respective third party services 301, 302, 303, 304. It is furthermore possible and preferred according to the present invention that the API 251 does not only allow the third party services 301, 302, 303, 304 to access raw data but also to functions such as matching (e.g. to different data elements) or relevancy evaluation/definition (e.g. it uses data and/or context to generate a relevancy information). Especially in such an embodiment of the present invention, it is advantageously possible that a set of such functions (such as matching or relevancy evaluation/definition) being callable through the API layer.

Third party services 301, 302, 303, 304 are preferably applications provided to the computing device 20 of the subscriber at a trusted marketplace 350. The trusted marketplace is, for example, an app store provided via the telecommunications network 100. Within the trusted marketplace 350, only trusted third party service 301, 302, 302, 304 are provided that are certified by a provider of the trusted marketplace 350. Certification criteria may be set in terms of how the third party service 301, 302, 303, 304 protects the personal data they have obtained from the data protection service 200. Preferably, the first third party services 301, 302, 303, 304 are provided together with a predefined set of access rules. Thereby, a default set of access rules is provided with each of the third party services 301, 302, 303, 304 which can be changed by the subscriber of the data protection service 200 by means of the computing device 20.

Further, according to any set of access rules, the amount of data transmitted to the third party service 301, 302, 303, 304 to which the set of access rule is assigned to is limited by an upper limit. Different upper limits may be defined for different third party services 301, 302, 303, 304.

In an alternate embodiment the approaches of the first and the second embodiment may be combined resulting in an API of grey box type. Within this embodiment the white box API 251 is accessible by trusted third-party services that are provided within the trusted marketplace 350 whereas non-trusted third party services may access the data protection service via a black box API 250.

## Claims

1. Method for anonymizing a user identity and/or user data of a subscriber of a data protection service (200),
wherein a first third party service (301) and a second third party service (302) are accessed by a computing device (20) of the subscriber via the telecommunications network (100), the computing device (20) being connected to the telecommunications network (100),
wherein in case that the first third party service (301) requests the transmission of user related data from the data protection service (200), the data protection service (200) transmits user related data being data related to the user identity and/or user data, wherein the user identity and/or the user data are at least partly anonymized with respect to the first third party service (301) according to a first set of access rules,
wherein in case that the second third party service (302) requests the transmission of user related data from the data protection service (200), the data protection service (200) transmits user related data being data related to the user identity and/or user data, wherein the user identity and/or the user data are at least partly anonymized with respect to the second third party service (302) according to a second set of access rules,
wherein the assignment of the first third party service (301) and/or the second third party service (302) to the first set of access rules and/or the second set of access rules is changed via the telecommunications network (100), by means of the computing device (20) of the subscriber of the data protection service (200), wherein the first third party service (301) is an application provided to the computing device (20) together with the first set of access rules as a predefined set of access rules in a trusted marketplace, and the second third party service (302) is an application provided to the computing device (20) together with the second set of access rules as a predefined set of access rules in a trusted marketplace,
wherein according to the first set of access rules a fake piece of data is transmitted as part of the user related data to the first third party service (301), wherein the fake piece of data is generated randomly or pseudo-randomly.

2. Method according to claim 1, wherein the telecommunications network (100) is an IP-based telecommunications network and/or the communication device (20) is a mobile communication device.

3. Method according to one of the preceding claims, wherein the user related data transmitted to the first third party service (301) and/or the second third party service (302) has a higher abstraction level compared with the user identity and/or user data of the subscriber of the data protection service (200).

4. Method according to any of the preceding claims, wherein, according to the first set of access rules transmission of an IP address of the communication device (20) of the subscriber and/or an IP address of the data protection service (200) is blocked.

5. Method according to any of the preceding claims, wherein according to the first set of access rules the amount of data transmitted to the first third party service (301) is limited by a first upper limit and according to the second set of access rules the amount of data transmitted to the second third party service (302) is limited by a second upper limit, wherein the first upper limit is different from the second upper limit.

6. Method according to any of the preceding claims, wherein according to the first set of access rules a first abstraction level of data transmitted to the first third party service (301) is set and according to the second set of access rules a second abstraction level of data transmitted to the second third party service (302) is set, wherein the first abstraction level is different from the second abstraction level.

7. System for anonymizing a user identity and/or user data of a subscriber of a data protection service (200), wherein the system is configured such that a first third party service (301) and a second third party service (302) are accessed by a computing device (20) of the subscriber via the telecommunications network (100), the computing device (20) being connected to the telecommunications network (100), wherein the system is configured such that in case that the first third party service (301) requests the transmission of user related data from the data protection service (200), the data protection service (200) transmits user related data being data related to the user identity and/or user data, wherein the user identity and/or the user data are at least partly anonymized with respect to the first third party service (301) according to a first set of access rules, wherein the system is configured such that in case that the second third party service (302) requests the transmission of user related data from the data protection service (200), the data protection service (200) transmits user related data being data related to the user identity and/or user data, wherein the user identity and/or the user data are at least partly anonymized with respect to the second third party service (302) according to a second set of access rules, wherein the system is configured such that the assignment of the first third party service (301) and/or the second third party service (302) to the first set of access rules and/or the second set of access rules is changed via the telecommunications network (100), by means of the computing device (20) of the subscriber of the data protection service (200),
wherein the system is configured such that the first third party service (301) is an application provided to the computing device (20) together with the first set of access rules as a predefined set of access rules in a trusted marketplace, and wherein the system is configured such that the second third party service (302) is an application provided to the computing device (20) together with the second set of access rules as a predefined set of access rules in a trusted marketplace, wherein according to the first set of access rules a fake piece of data is transmitted as part of the user related data to the first third party service (301), wherein the fake piece of data is generated randomly or pseudo-randomly.

8. Program comprising a computer readable program code which, when executed on a computer or on a computing device (20) or on a network component of a telecommunications network (100) or in part on a computing device (20) and in part on a network component of a telecommunications network (100), causes the computer or the computing device (20) and/or the network component of the telecommunications network (100) to perform a method according to one of claims 1 to 6.

9. Computer program product for using a machine type communication device (20) with a telecommunications network (100), the computer program product comprising a computer program stored on a storage medium, the computer program comprising program code which, when executed on a computer or on a computing device (20) or on a network component of a telecommunications network (100) or in part on a computing device (20) and in part on a network component of a telecommunications network (100), causes the computer or the computing device (20) and/or the network component of the telecommunications network (100) to perform a method according to one of claims 1 to 6.

## Patentansprüche

1. Verfahren zum Anonymisieren einer Benutzeridentität und/oder von Benutzerdaten eines Abonnenten eines Datenschutzdienstes (200),
wobei von einer Computervorrichtung (20) des Abonnenten aus über das Telekommunikationsnetz (100) auf einen ersten Drittanbieterdienst (301) und einen zweiten Drittanbieterdienst (302) zugegriffen wird, wobei die Computervorrichtung (20) mit dem Telekommunikationsnetz (100) verbunden ist,
wobei für den Fall, dass der erste Drittanbieterdienst (301) die Übertragung von benutzerbezogenen Daten von dem Datenschutzdienst (200) anfordert, der Datenschutzdienst (200) benutzerbezogene Daten überträgt, die Daten sind, die sich auf die Benutzeridentität und/oder Benutzerdaten beziehen,
wobei die Benutzeridentität und/oder die Benutzerdaten in Bezug auf den ersten Drittanbieterdienst (301) gemäß einem ersten Satz Zugriffsregeln mindestens teilweise anonymisiert werden,
wobei für den Fall, dass der zweite Drittanbieterdienst (302) die Übertragung von benutzerbezogenen Daten von dem Datenschutzdienst (200) anfordert, der Datenschutzdienst (200) benutzerbezogene Daten überträgt, die Daten sind, die sich auf die Benutzeridentität und/oder Benutzerdaten beziehen,
wobei die Benutzeridentität und/oder die Benutzerdaten in Bezug auf den zweiten Drittanbieterdienst (302) gemäß einem zweiten Satz Zugriffsregeln mindestens teilweise anonymisiert werden,
wobei die Zuordnung des ersten Drittanbieterdienstes (301) und/oder des zweiten Drittanbieterdienstes (302) zu dem ersten Satz Zugriffsregeln und/oder dem zweiten Satz Zugriffsregeln über das Telekommunikationsnetz (100) mittels der Computervorrichtung (20) des Abonnenten des Datenschutzdienstes (200) geändert wird,
wobei der erste Drittanbieterdienst (301) eine Anwendung ist, die der Computervorrichtung (20) zusammen mit dem ersten Satz Zugriffsregeln als ein vordefinierter Satz Zugriffsregeln in einem vertrauenswürdigen Marktplatz bereitgestellt wird, und der zweite Drittanbieterdienst (302) eine Anwendung ist, die der Computervorrichtung (20) zusammen mit dem zweiten Satz Zugriffsregeln als ein vordefinierter Satz Zugriffsregeln in einem vertrauenswürdigen Marktplatz bereitgestellt wird, wobei gemäß dem ersten Satz Zugriffsregeln ein gefälschtes Datenelement als Teil der benutzerbezogenen Daten an den ersten Drittanbieterdienst (301) übertragen wird,
wobei das gefälschte Datenelement zufällig oder pseudozufällig generiert wird.

2. Verfahren nach Anspruch 1,
wobei das Telekommunikationsnetz (100) ein IP-basiertes Telekommunikationsnetz ist und/oder die Kommunikationsvorrichtung (20) eine mobile Kommunikationsvorrichtung ist.

3. Verfahren nach einem der vorangehenden Ansprüche,
wobei die an den ersten Drittanbieterdienst (301) und/oder den zweiten Drittanbieterdienst (302) übertragenen benutzerbezogenen Daten ein höheres Abstraktionsniveau im Vergleich zu der Benutzeridentität und/oder den Benutzerdaten des Abonnenten des Datenschutzdienstes (200) aufweisen.

4. Verfahren nach einem der vorangehenden Ansprüche,
wobei gemäß dem ersten Satz Zugriffsregeln die Übertragung einer IP-Adresse der Kommunikationsvorrichtung (20) des Abonnenten und/oder einer IP-Adresse des Datenschutzdienstes (200) gesperrt ist.

5. Verfahren nach einem der vorangehenden Ansprüche,
wobei gemäß dem ersten Satz Zugriffsregeln die Menge der an den ersten Drittanbieterdienst (301) übertragenen Daten durch eine erste Obergrenze begrenzt ist und gemäß dem zweiten Satz Zugriffsregeln die Menge der an den zweiten Drittanbieterdienst (302) übertragenen Daten durch eine zweite Obergrenze begrenzt ist,
wobei die erste Obergrenze von der zweiten Obergrenze verschieden ist.

6. Verfahren nach einem der vorangehenden Ansprüche,
wobei gemäß dem ersten Satz Zugriffsregeln ein erstes Abstraktionsniveau von Daten, die an den ersten Drittanbieterdienst (301) übertragen werden, eingestellt wird und gemäß dem zweiten Satz Zugriffsregeln ein zweites Abstraktionsniveau von Daten, die an den zweiten Drittanbieterdienst (302) übertragen werden, eingestellt wird,
wobei das erste Abstraktionsniveau von dem zweiten Abstraktionsniveau verschieden ist.

7. System zum Anonymisieren einer Benutzeridentität und/oder von Benutzerdaten eines Abonnenten eines Datenschutzdienstes (200),
wobei das System so eingerichtet ist, dass von einer Computervorrichtung (20) des Abonnenten aus über das Telekommunikationsnetz (100) auf einen ersten Drittanbieterdienst (301) und einen zweiten Drittanbieterdienst (302) zugegriffen wird, wobei die Computervorrichtung (20) mit dem Telekommunikationsnetz (100) verbunden ist,
wobei das System so eingerichtet ist, dass für den Fall, dass der erste Drittanbieterdienst (301) die Übertragung von benutzerbezogenen Daten von dem Datenschutzdienst (200) anfordert, der Datenschutzdienst (200) benutzerbezogene Daten überträgt, die Daten sind, die sich auf die Benutzeridentität und/oder Benutzerdaten beziehen,
wobei die Benutzeridentität und/oder die Benutzerdaten in Bezug auf den ersten Drittanbieterdienst (301) gemäß einem ersten Satz Zugriffsregeln mindestens teilweise anonymisiert werden,
wobei das System so eingerichtet ist, dass für den Fall, dass der zweite Drittanbieterdienst (302) die Übertragung von benutzerbezogenen Daten von dem Datenschutzdienst (200) anfordert, der Datenschutzdienst (200) benutzerbezogene Daten überträgt, die Daten sind, die sich auf die Benutzeridentität und/oder Benutzerdaten beziehen,
wobei die Benutzeridentität und/oder die Benutzerdaten in Bezug auf den zweiten Drittanbieterdienst (302) gemäß einem zweiten Satz Zugriffsregeln mindestens teilweise anonymisiert werden,
wobei das System so eingerichtet ist, dass die Zuordnung des ersten Drittanbieterdienstes (301) und/oder des zweiten Drittanbieterdienstes (302) zu dem ersten Satz Zugriffsregeln und/oder dem zweiten Satz Zugriffsregeln über das Telekommunikationsnetz (100) mittels der Computervorrichtung (20) des Abonnenten des Datenschutzdienstes (200) geändert wird,
wobei das System so eingerichtet ist, dass der erste Drittanbieterdienst (301) eine Anwendung ist, die der Computervorrichtung (20) zusammen mit dem ersten Satz Zugriffsregeln als ein vordefinierter Satz Zugriffsregeln in einem vertrauenswürdigen Marktplatz bereitgestellt wird, und wobei das System so eingerichtet ist, dass der zweite Drittanbieterdienst (302) eine Anwendung ist, die der Computervorrichtung (20) zusammen mit dem zweiten Satz Zugriffsregeln als ein vordefinierter Satz Zugriffsregeln in einem vertrauenswürdigen Marktplatz bereitgestellt wird, und wobei gemäß dem ersten Satz Zugriffsregeln ein gefälschtes Datenelement als Teil der benutzerbezogenen Daten an den ersten Drittanbieterdienst (301) übertragen wird,
wobei das gefälschte Datenelement zufällig oder pseudozufällig generiert wird.

8. Programm, umfassend einen computerlesbaren Programmcode, der, wenn er auf einem Computer oder auf einer Computervorrichtung (20) oder auf einer Netzkomponente eines Telekommunikationsnetzes (100) oder teilweise auf einer Computervorrichtung (20) und teilweise auf einer Netzkomponente eines Telekommunikationsnetzes (100) ausgeführt wird, den Computer oder die Computervorrichtung (20) und/oder die Netzkomponente des Telekommunikationsnetzes (100) veranlasst, ein Verfahren nach einem der Ansprüche 1 bis 6 auszuführen.

9. Computerprogrammprodukt zur Verwendung einer Kommunikationsvorrichtung (20) vom Maschinentyp mit einem Telekommunikationsnetz (100), wobei das Computerprogrammprodukt ein auf einem Speichermedium gespeichertes Computerprogramm umfasst, wobei das Computerprogramm Programmcode umfasst, der, wenn er auf einem Computer oder auf einer Computervorrichtung (20) oder auf einer Netzkomponente eines Telekommunikationsnetzes (100) oder teilweise auf einer Computervorrichtung (20) und teilweise auf einer Netzkomponente eines Telekommunikationsnetzes (100) ausgeführt wird, den Computer oder die Computervorrichtung (20) und/oder die Netzkomponente des Telekommunikationsnetzes (100) veranlasst, ein Verfahren nach einem der Ansprüche 1 bis 6 auszuführen.

## Revendications

1. Procédé d'anonymisation d'une identité d'utilisateur et/ou de données d'utilisateur d'un abonné d'un service de protection de données (200),
dans lequel un premier service tiers (301) et un second service tiers (302) sont accessibles par un dispositif informatique (20) de l'abonné via le réseau de télécommunications (100), le dispositif informatique (20) étant connecté au réseau de télécommunications (100),
dans lequel dans un cas où le premier service tiers (301) demande la transmission de données liées à l'utilisateur depuis le service de protection de données (200), le service de protection de données (200) transmet des données liées à l'utilisateur qui sont des données liées à l'identité d'utilisateur et/ou des données d'utilisateur, dans lequel l'identité d'utilisateur et/ou les données d'utilisateur sont au moins en partie anonymisées par rapport au premier service tiers (301) selon un premier ensemble de règles d'accès, dans lequel dans un cas où le second service tiers (302) demande la transmission de données liées à l'utilisateur depuis le service de protection de données (200), le service de protection de données (200) transmet des données liées à l'utilisateur qui sont des données liées à l'identité d'utilisateur et/ou des données d'utilisateur, dans lequel l'identité d'utilisateur et/ou les données d'utilisateur sont au moins en partie anonymisées par rapport au second service tiers (302) selon un second ensemble de règles d'accès,
dans lequel l'attribution du premier service tiers (301) et/ou du second service tiers (302) au premier ensemble de règles d'accès et/ou au second ensemble de règles d'accès est changée via le réseau de télécommunications (100), au moyen du dispositif informatique (20) de l'abonné du service de protection de données (200),
dans lequel le premier service tiers (301) est une application fournie au dispositif informatique (20) conjointement avec le premier ensemble de règles d'accès en tant qu'ensemble prédéfini de règles d'accès dans une place de marché de confiance, et le second service tiers (302) est une application fournie au dispositif informatique (20) conjointement avec le second ensemble de règles d'accès en tant qu'ensemble prédéfini de règles d'accès dans une place de marché de confiance,
dans lequel selon le premier ensemble de règles d'accès une fausse donnée est transmise dans le cadre des données liées à l'utilisateur au premier service tiers (301), dans lequel la fausse donnée est générée aléatoirement ou pseudo-aléatoirement.

2. Procédé selon la revendication 1, dans lequel le réseau de télécommunications (100) est un réseau de télécommunications IP et/ou le dispositif de communication (20) est un dispositif de communication mobile.

3. Procédé selon l'une des revendications précédentes, dans lequel les données liées à l'utilisateur transmises au premier service tiers (301) et/ou au second service tiers (302) ont un niveau d'abstraction plus élevé en comparaison à l'identité d'utilisateur et/ou aux données d'utilisateur de l'abonné du service de protection de données (200).

4. Procédé selon l'une quelconque des revendications précédentes, dans lequel, selon le premier ensemble de règles d'accès une transmission d'une adresse IP du dispositif de communication (20) de l'abonné et/ou d'une adresse IP du service de protection de données (200) est bloquée.

5. Procédé selon l'une quelconque des revendications précédentes, dans lequel, selon le premier ensemble de règles d'accès la quantité de données transmises au premier service tiers (301) est limitée par une première limite supérieure et selon le second ensemble de règles d'accès la quantité de données transmises au second service tiers (302) est limitée par une seconde limite supérieure, dans lequel la première limite supérieure est différente de la seconde limite supérieure.

6. Procédé selon l'une quelconque des revendications précédentes, dans lequel selon le premier ensemble de règles d'accès un premier niveau d'abstraction de données transmises au premier service tiers (301) est réglé et selon le second ensemble de règles d'accès un second niveau d'abstraction de données transmises au second service tiers (302) est réglé, dans lequel le premier niveau d'abstraction est différent du second niveau d'abstraction.

7. Système d'anonymisation d'une identité d'utilisateur et/ou de données d'utilisateur d'un abonné d'un service de protection de données (200), dans lequel le système est configuré de sorte qu'un premier service tiers (301) et un second service tiers (302) soient accessibles par un dispositif informatique (20) de l'abonné via le réseau de télécommunications (100), le dispositif informatique (20) étant connecté au réseau de télécommunications (100), dans lequel le système est configuré de sorte que dans un cas où le premier service tiers (301) demande la transmission de données liées à l'utilisateur depuis le service de protection de données (200), le service de protection de données (200) transmette des données liées à l'utilisateur qui sont des données liées à l'identité d'utilisateur et/ou des données d'utilisateur, dans lequel l'identité d'utilisateur et/ou les données d'utilisateur sont au moins en partie anonymisées par rapport au premier service tiers (301) selon un premier ensemble de règles d'accès, dans lequel le système est configuré de sorte que dans un cas où le second service tiers (302) demande la transmission de données liées à l'utilisateur depuis le service de protection de données (200), le service de protection de données (200) transmette des données liées à l'utilisateur qui sont des données liées à l'identité d'utilisateur et/ou des données d'utilisateur, dans lequel l'identité d'utilisateur et/ou les données d'utilisateur sont au moins en partie anonymisées par rapport au second service tiers (302) selon un second ensemble de règles d'accès,
dans lequel le système est configuré de sorte que l'attribution du premier service tiers (301) et/ou du second service tiers (302) au premier ensemble de règles d'accès et/ou au second ensemble de règles d'accès soit changée via le réseau de télécommunications (100), au moyen du dispositif informatique (20) de l'abonné du service de protection de données (200),
dans lequel le système est configuré de sorte que le premier service tiers (301) soit une application fournie au dispositif informatique (20) conjointement avec le premier ensemble de règles d'accès en tant qu'ensemble prédéfini de règles d'accès dans une place de marché de confiance, et
dans lequel le système est configuré de sorte que le second service tiers (302) soit une application fournie au dispositif informatique (20) conjointement avec le second ensemble de règles d'accès en tant qu'ensemble prédéfini de règles d'accès dans une place de marché de confiance,
dans lequel selon le premier ensemble de règles d'accès une fausse donnée est transmise dans le cadre des données liées à l'utilisateur au premier service tiers (301), dans lequel la fausse donnée est générée aléatoirement ou pseudo-aléatoirement.

8. Programme comprenant un code de programme lisible par ordinateur qui, lorsqu'il est exécuté sur un ordinateur ou sur un dispositif informatique (20) ou sur un composant de réseau d'un réseau de télécommunications (100) ou en partie sur un dispositif informatique (20) et en partie sur un composant de réseau d'un réseau de télécommunications (100), amène l'ordinateur ou le dispositif informatique (20) et/ou le composant de réseau du réseau de télécommunications (100) à exécuter un procédé selon l'une des revendications 1 à 6.

9. Produit-programme d'ordinateur permettant d'utiliser un dispositif de communication de type machine (20) avec un réseau de télécommunications (100), le produit-programme d'ordinateur comprenant un programme d'ordinateur stocké sur un support de stockage, le programme d'ordinateur comprenant un code de programme qui, lorsqu'il est exécuté sur un ordinateur ou sur un dispositif informatique (20) ou sur un composant de réseau d'un réseau de télécommunications (100) ou en partie sur un dispositif informatique (20) et en partie sur un composant de réseau d'un réseau de télécommunications (100), amène l'ordinateur ou le dispositif informatique (20) et/ou le composant de réseau du réseau de télécommunications (100) à exécuter un procédé selon l'une des revendications 1 à 6.
